# EUROPÄISCHE PATENTSCHRIFT

(11) **EP 1 024 607 B1**
(45) Veröffentlichungstag und Bekanntmachung des Hinweises auf die Patenterteilung: **02.05.2007**
(21) Anmeldenummer: 00100320.1
(22) Anmeldetag: 07.01.2000
(51) Int. Cl.: H04B 7/04, H04B 7/12, H04B 7/26

(54) **Mehrkanaliges Funkübertragungssystem**
Multichannel radio transmission system
Système de radiocommunications à plusieurs canaux

(30) Priorität: 29.01.1999 DE 19903428
(43) Veröffentlichungstag der Anmeldung: 02.08.2000
(73) Patentinhaber: Ericsson AB, Stockholm (SE)
(72) Erfinder: Focke, Thomas, 31180 Ahrbergen (DE); Wixforth, Thomas, 31139 Hildesheim (DE); Gebauer, Thomas, 71573 Allmersbach i. Tal (DE)
(74) Vertreter: Collier, Ian Terry

(56) Entgegenhaltungen:
- WO-A-97/11508
- GEBAUER T ET AL: "CHANNEL-INDIVIDUAL ADAPTIVE BEAMFORMING FOR MOBILE SATELLITE COMMUNICATIONS" IEEE JOURNAL ON SELECTED AREAS IN COMMUNICATIONS, IEEE INC. NEW YORK, US, Bd. 13, Nr. 2, 1. Februar 1995 (1995-02-01), Seiten 439-448, XP000489309 ISSN: 0733-8716
- SHANG-CHIEH LIU ET AL: "The numerically stable QRD-DMS receiver and overlapped channel transmission technique for slow frequency hopped multiple access networks" MILITARY COMMUNICATIONS CONFERENCE, 1998. MILCOM 98. PROCEEDINGS., IEEE BOSTON, MA, USA 18-21 OCT. 1998, NEW YORK, NY, USA,IEEE, US, 18. Oktober 1998 (1998-10-18), Seiten 323-327, XP010307845 ISBN: 0-7803-4506-1

## Beschreibung

### Stand der Technik

Die vorliegende Erfindung betrifft ein mehrkanaliges Funkübertragungssystem, bei dem die Frequenzkanäle im Frequenz- und Raummultiplex über eine Gruppenantenne gesendet bzw. empfangen werden, wobei die einzelnen Antennenelemente der Gruppenantenne über ein Strahlformungsnetzwerk so ansteuerbar sind, daß jedem Frequenzkanal eine in eine bestimmte Raumrichtung orientierte Antennencharakteristik zuweisbar ist.

Ein derartiges mehrkanaliges Funkübertragunssystem ist z.B. aus der DE 195 35 441 A1 bekannt. Gemäß dieser Druckschrift wird in einem Punkt-zu-Mehrpunkt-Richtfunksystem neben einem Vielfachzugriff im Frequenzmultiplex auch ein Vielfachzugriff im Raummultiplex angewendet. Eine Gruppenantenne mit mehreren Antennenelementen sendet und empfängt die bezgl. der Frequenz und des Raumes gemultiplexten Signale. Durch geeignete gegenseitige Laufzeitverzögerung der die einzelnen Antennenelemente speisenden Signale kann die Abstrahlung bzw. der Empfang von Signalen raumrichtungsabhängig gesteuert werden. Die Antennencharakteristik der Gruppenantenne läßt sich also variabel formen. In der Literatur wird in diesem Zusammenhang z.B. von räumlicher Filterung oder Strahlformung oder Spatial-Division-Multiple-Access (SDMA) gesprochen. Die Anwendung von sowohl Frequenzmultiplex als auch Raummultiplex führt zu einer erheblichen Steigerung der Nachrichtenübertragungskapazität, weil Frequenzkanäle gleicher Frequenzlage in verschiedenen Raumrichtungen wiederholt übertragen werden können.

Bei dem bekannten mehrkanaligen Funkübertragungssystem wird jeder einzelne Frequenzkanal in einem Strahlformungsnetzwerk einer komplexen Wichtung unterzogen, so daß für jeden Frequenzkanal eine eigene Antennencharakteristik mit einer vorgebbaren Raumrichtung entsteht. Dabei wird jeder Frequenzkanal für sich auf so viele Wichtungsglieder aufgeteilt, wie es Antennenelemente gibt. Die Wichtungsglieder kann man auch als Filter bezeichnen, die einen ganz bestimmten Amplituden- und Phasengang haben. Das Funkübertragungssystem gemäß dem Stand der Technik benötigt bei einer Anzahl von K Frequenzkanälen und einer Anzahl von N Antennenelmenten K * N Filter. Bei einer großen Zahl von Frequenzkanälen (z.B. 150) und einer dementsprechend auch sehr hohen Zahl von Antennenelementen muß das Strahlformungsnetzwerk eine extrem hohe Zahl von Filtern enthalten. Als Folge davon ist auch für die Signalaufteilung auf die einzelnen Antennenelemente ein sehr umfangreiches Kombinator- bzw. Verzweigungsnetzwerk erforderlich.

Ein weiteres mehrkanaliges Funkübertragungssystem wird in dem Dokument "Channel-individual adaptive beam forming for Mobile Satellite Communications", Gebauer et al, IEEE, 1. Februar 1995, beschrieben.

Der Erfindung liegt daher die Aufgabe zugrunde, ein mehrkanaliges Funkübertragungssystem der eingangs genannten Art anzugeben, bei dem sich der Schaltungsaufwand gegenüber dem Stand der Technik möglichst weitgehend reduziert.

### Vorteile der Erfindung

Die genannte Aufgabe wird mit den Merkmalen des Anspruchs 1 dadurch gelöst, daß die Frequenzkanäle im Frequenzmultiplex in mehrere Frequenzkanalgruppen zusammengefaßt und jede Frequenzkanalgruppe zu gleichen Leistungsanteilen auf so viele Filter im Strahlformungsnetzwerk aufgeteilt wird, wie es Antennenelemente gibt. Dabei weist jedes Filter eine alle Frequenzen der ihm zugeordneten Frequenzkanalgruppe umfassende Übertragungsbandbreite auf. Die Übertragungsfunktion jedes Filters ist über seine Koeffizienten so einstellbar, daß für jeden Frequenzkanal der dem Filter zugeordneten Frequenzkanalgruppe eine individuelle Antennencharakteristik generierbar ist.

Durch die Zusammenfassung mehrerer Frequenzkanäle in Frequenzkanalgruppen reduziert sich die Zahl der Filter im Strahlformungsnetzwerk gegenüber dem Stand der Technik, bei dem jedem einzelnen Frequenzkanal so viele Filter zugeordnet sind, wie es Antennenelemente gibt. Die Verminderung der Anzahl der Filter führt ebenso zu einer Reduzierung von die Filtersignale verarbeitenden Schaltungsmitteln.

Um den Filteraufwand zu reduzieren ist es zweckmäßig, die Frequenzkanäle so auf die Frequenzkanalgruppen aufzuteilen, daß die Abstände der Frequenzkanäle innerhalb der einzelnen Frequenzkanalgruppen möglichst groß sind.

Vorteilhafte Weiterbildungen der Erfindung gehen aus den Unteransprüchen hervor.

Eine flexiblere Zuordnung von Frequenzkanälen zu unterschiedlichen raumrichtungsabhängigen Antennencharakteristiken kann dadurch erzielt werden, daß erste Mittel vorgesehen sind, welche die Frequenzkanalgruppen durch Frequenzmultiplex zu einem einzigen Frequenzkanalbündel zusammenfügen, und daß zweite Mittel vorhanden sind, welche das Frequenzkanalbündel wieder in Frequenzkanalgruppen separieren, um sie dann der strahlformenden Filterung zuzuführen.

Als Filter können z.B. solche mit begrenzter Impulsantwort (FIR-Filter) oder solche mit unbegrenzter Impulsantwort (IIR-Filter) eingesetzt werden. Die FIR-Filter können mittels schneller Faltung realisiert sein.

### Zeichnung

Anhand mehrerer in der Zeichnung dargestellter Ausführungsbeispiele wird nachfolgend die Erfindung näher erläutert. Es zeigen:
Figur 1 ein Blockschaltbild eines mehrkanaligen Funkübertragungssystems,
Figur 2 eine Einteilung von Frequenzkanälen in Frequenzkanalgruppen,
Figur 3 ein Blockschaltbild eines mehrkanaligen Funkübertragungssystems, bei dem mehrere Frequenzkanalgruppen gebündelt sind und
Figur 4 mehrere in einem Frequenzbündel zusammengefaßte Frequenzkanalgruppen.

### Beschreibung von Ausführungsbeispielen

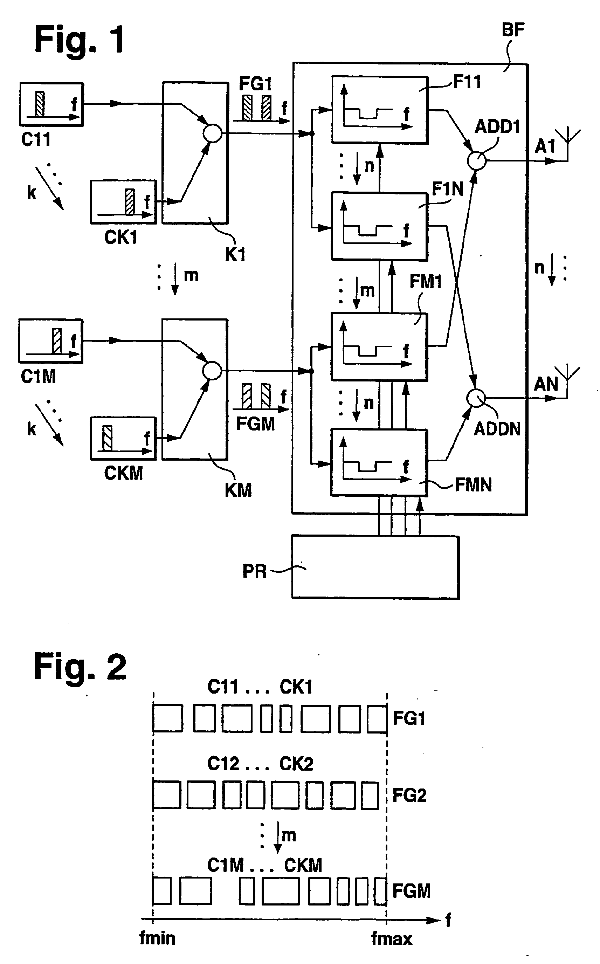

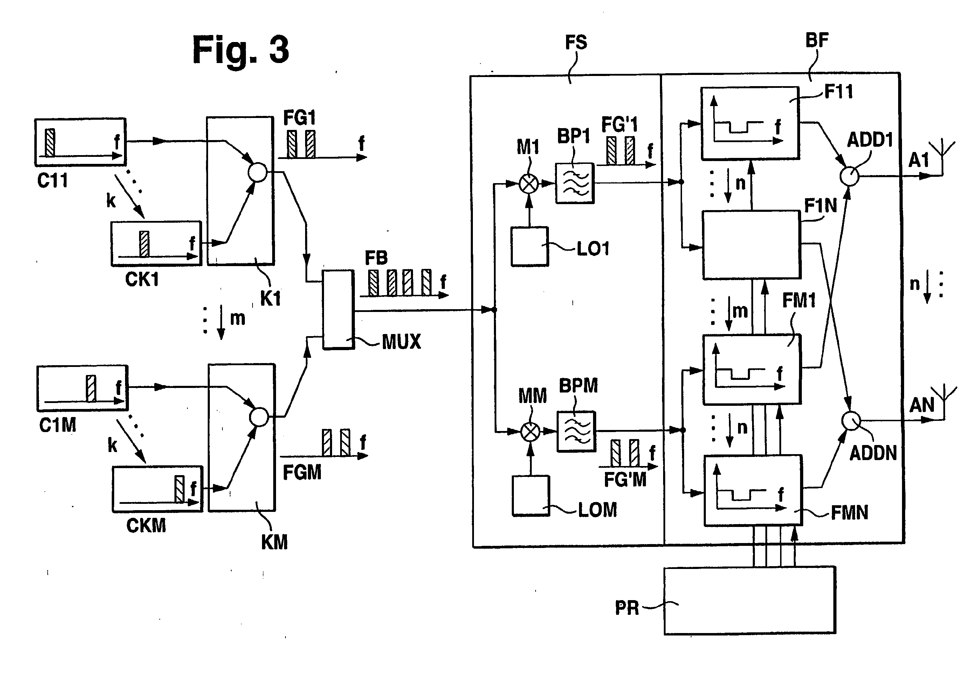

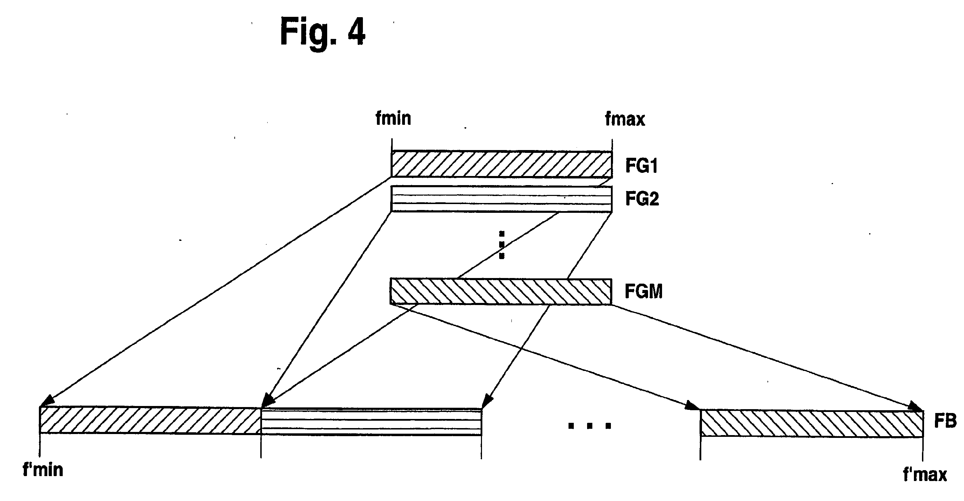

Das in der Figur 1 dargestellte Blockschaltbild soll das Prinzip eines mehrkanaligen Funkübertragungssystems verdeutlichen. Solch eine mehrkanalige Nachrichtenübertragung findet z.B. zwischen einer Zentralstation und einer Vielzahl von Teilnehmerstationen innerhalb eines Punkt-zu-Mehrpunkt-Richtfunksystems statt. Die Funktionsweise des in der Figur 1 gezeigten mehrkanaligen Funkübertragungssystems wird anschließend für den Sendebetrieb genauer beschrieben. Eine gesonderte Darlegung des Empfangsbetriebes erübrigt sich, weil er lediglich die Umkehrung des Sendebetriebs ist und allenfalls für den Sendebetrieb erforderliche Kombinatorschaltungen nun im Empfangsbetrieb die entgegengesetzte Funktion nämlich als Verzweigungsschaltungen haben.

Das dargestellte Funkübertragungssystem besitzt eine Vielzahl von Modems, denen separate Frequenzkanäle Ckm (k = 1, ..., K und m = 1,..., M) zugeordnet sind. Mit Frequenzkanälen sind modulierte Trägerfrequenzen gemeint. Sämtliche vorhandenen Frequenzkanäle Ckm werden in m Frequenzkanalgruppen eingeteilt. In der Figur 2 sind beispielhaft einige Frequenzkanalgruppen FG1, FG2 und FGM dargestellt, in denen jeweils unterschiedliche Frequenzkanäle Ckm, die auch verschiedene Bandbreiten haben können, zusammengefaßt sind. Die Zusammenfassung der Frequenzkanäle in Frequenzkanalgruppen erfolgt über Kombinierer K1 bis KM. Bei der Zuteilung der Frequenzkanäle Ckm auf die Frequenzkanalgruppen FG1 bis FGM ist darauf zu achten, daß innerhalb jeder Frequenzkanalgruppe sich die Frequenzkanäle Ckm nicht gegenseitig überlappen und ausreichend große Frequenzabstände aufweisen. Mit anderen Worten erfolgt der Aufbau einer jeden Frequenzkanalgruppe durch Frequenzmultiplex der vorhandenen Frequenzkanäle.

Die insgesamt M Frequenzkanalgruppen FG1 bis FGM werden einem Strahlformungsnetzwerk BF zugeführt. In dem Strahlformungsnetzwerk BF befinden sich mehrere Filter Fmn (m = 1, ..., M und n = 1, ... , N). Die Aufteilung der Filter Fmn ist so, daß für jede der m = 1, ..., M Frequenzkanalgruppen FGm soviele Filter Fmn vorhanden sind, wie eine Gruppenantenne Antennenelemente An (n = 1, ..., N) hat. Jede Frequenzkanalgruppe FGm wird auf die N Filter der ihr zugeordneten Filter-Gruppe zu gleichen Leistungsanteilen aufgeteilt. So wird z.B. die Frequenzkanalgruppe FG1 auf die Filter F11 bis F1N und die Frequenzkanalgruppe FGM auf die Filter FM1 bis FMN aufgeteilt.

Zu jedem Antennenelement An gibt es einen Addierer ADDn, der aus den Ausgangssignalen aller zu dem n-ten Antenennenelement An gehörenden Filter Fmn die Summe bildet und dieses Summensignal dem Antennenelement An zuführt. Wie der Figur 1 zu entnehmen ist, bildet also der Addierer ADD1 aus den Ausgangssignalen der Filter F11 bis FM1 und der Addierer ADDN aus den Ausgangssignalen aller Filter F1N bis FMN Summensignale für das Antennenelement A1 bzw. AN. Jedes Filter Fmn hat eine Übertragungsfunktion, welche die gesamte Bandbreite fmin bis fmax der Frequenzkanalgruppen FGm umfaßt. Die Übertragungsfunktion eines jeden Filters Fmn weist einen solchen Amplituden- und Phasengang auf, daß jedem Frequenzkanal Ckm innerhalb der dem Filter jeweils zugewiesenen Frequenzkanalgruppe eine individuelle Wichtung seiner Amplitude und Phase erfährt, so daß die Antennenelemente An der Gruppenantenne für den jeweiligen Frequenzkanal eine individuelle Antennencharakteristik erzeugen. Auf diese Weise ist es möglich, Frequenzkanäle in gleichen Frequenzlagen über Antennencharakteristiken mit unterschiedlich orientierten Raumrichtungen voneinander zu trennen. Das beschriebene mehrkanalige Funkübertragungssystem vollzieht also eine Trennung der Frequenzkanäle sowohl durch Frequenzmultiplex als auch durch Raummultiplex.

Die frequenzkanalindividuelle Formung der Übertragungsfunktion der einzelnen Filter Fmn erfolgt über eine entsprechende Einstellung der Filterkoeffizienten. Die Filterkoeffizienten können fest eingestellt sein oder aber über einen Prozessor PR adaptiv so angepaßt werden, daß zur optimalen Entkopplung von Frequenzkanälen mit gleicher Frequenzlage Antennencharakteristiken mit deutlich unterschiedlicher.Raumrichtung gebildet werden. Als Kriterium für die Einstellung der Filterkoeffizienten könnten beispielsweise Empfangssignale der Antennenelemente An und deren gegenseitige Ver- bzw. Entkopplung im Prozessor PR ausgewertet werden.

Bei breitbandigen Funkübertragungssystemen mit sehr vielen, sehr eng nebeneinander liegenden Frequenzkanälen Ckm innerhalb einer jeden Frequenzkanalgruppe FGm kann der Realisierungsaufwand für die Übertragungsfunktionen der Filter Fmn dadurch verringert werden, daß sehr eng benachbarte Frequenzkanäle auf mehrere Frequenzkanalgruppen so aufgeteilt werden, daß sich ein möglichst großer Abstand zwischen den einzelnen Frequenzkanälen innerhalb der Frequenzkanalgruppen ergibt. Als Folge davon brauchen die Filterübertragungsfunktionen keine extrem hohen Flankensteilheiten aufzuweisen, was den Filteraufwand und auch die Signaldurchlaufzeiten der Filter verringert.

Als Filter Fmn können an sich bekannte Filter mit begrenzter Impulsantwort (FIR-Filter) die z.B., wie aus dem Lehrbuch von D. Achilles: Die Fourier-Transformation in der Signalverarbeitung, zweite Auflage 1985, Springer-Verlag Kapitel 5.hervorgeht, mittels der schnellen Faltung realisiert sind. Oder es können Filter mit unbegrenzter Impulsantwort (IIR-Filter) eingesetzt werden.

Bei dem in der Figur 3 dargestellten Ausführungsbeispiel eines mehrkanaligen Funkübertragungssystems werden die Frequenzkanalgruppen FG1 bis FGM von einem Multiplexer MUX zu einem Frequenzkanalbündel FB zusammengefügt. Die Figur 4 verdeutlicht, wie die einzelnen Frequenzkanalgruppen FG1, FG2 bis FGM im Frequenzmultiplex zu dem Frequenzkanalbündel FB aneinander gereiht werden. Während die Bandbreite der Frequenzkanalgruppen durch die Frequenzen fmin und fmax begrenzt ist, hat nun das Frequenzkanalbündel FB eine entsprechend der Zahl M der Frequenzkanalgruppen vervielfachte Bandbreite zwischen den Frequenzen f'min und f'max. Das Frequenzkanalbündel FB wird einem Netzwerk FS zur Selektion von Frequenzkanälen zugeführt. Dieses Netzwerk FS enthält für jede neu zu bildende Frequenzkanalgruppe FG'1 bis FG'M einen Mischer Mm (m = 1, ..., M), einen Lokaloszillator LOm, der die Referenzfrequenz für den Mischer Mm bildet, und ein dem Mischer Mm nachgeschaltetes Bandpaßfilter BPm. Mit Hilfe dieser Schaltungen können Frequenzkanalgruppen aus dem Frequenzkanalbündel FB in beliebige Frequenzlagen umgesetzt werden, so daß daraus neue Frequenzkanalgruppen FG'1 bis FG'M entstehen. Schließlich werden diese neuen Frequenzkanalgruppen FG'1 bis FG'M dem Strahlformungsnetzwerk BF zugeführt, in denen die bereits oben beschriebene Weiterverarbeitung der Frequenzkanäle erfolgt.

## Patentansprüche

1. Mehrkanaliges Funkübertragungssystem, bei dem die Frequenzkanäle im Frequenz- und Raummultiplex über eine Gruppenantenne gesendet bzw. empfangen werden, wobei die einzelnen Antennenelemente (A1, ..., AN) der Gruppenantenne über ein Strahlformungsnetzwerk (BF) so ansteuerbar sind, dass jedem Frequenzkanal (C11, ..., Ckm) eine in eine bestimmte Raumrichtung orientierte Antennencharakteristik zuweisbar ist, und
- die Frequenzkanäle (C11, ..., Ckm) im Frequenzmultiplex in mehrere Frequenzkanalgruppen (FG1, ..., FGK) zusammengefasst sind,
- jede Frequenzkanalgruppe (FG1, ..., FGM) zu gleichen Leistungsanteilen auf so viele Filter (F11, ..., FMN) im Strahlformungsnetzwerk (BF) aufgeteilt ist wie es Antennenlemente (A1, ..., AM) gibt,
- jedes Filter (F11, ..., FMN) eine alle Frequenzen der ihm zugeordneten Frequenzkanalgruppe (FG1, ..., FGM) umfassende Übertragungsbandbreite aufweist,
- und die Übertragungsfunktion jedes Filters (F11, ..., FMN) über seine Koeffizienten so einstellbar ist, dass für jeden Frequenzkanal (C11, ..., Ckm) der dem Filter zugeordneten Frequenzkanalgruppe (FG1, ..., FGM) eine individuelle Antennencharakteristik generierbar ist,
**dadurch gekennzeichnet, dass** die Frequenzkanäle (C11, ..., Ckm) so auf die Frequenzkanalgruppen (FG1, ..., FGM) aufgeteilt sind, dass die Abstände der Frequenzkanäle innerhalb der einzelnen Frequenzkanalgruppen (FG1, ..., FGM) möglichst gross sind.

2. Mehrkanaliges Funkübertragungssystem nach Anspruch 1, **dadurch gekennzeichnet, dass** erste Mittel (MUX) vorgesehen sind, welche die Frequenzkanalgruppen (FG1, ..., FGM) durch Frequenzmultiplex zu einem einzigen Frequenzkanalbündel (FB) zusammenfügen und dass zweite Mittel (M1, LO1, BP1, ..., MM, LOM, BPM) vorhanden sind, welche das Frequenzkanalbündel (FB) wieder in Frequenzkanalgruppen (FG'1, ..., FG'M) separieren, um sie dann der strahlformenden Filterung (BF) zuzuführen.

3. Mehrkanaliges Funkübertragungssystem nach Anspruch 1, **dadurch gekennzeichnet, dass** die Filterung im Strahlformungsnetzwerk (BF) mittels Filtern (F11, ..., FMN) mit begrenzter Impulsantwort (FIR-Filter) erfolgt.

4. Mehrkanaliges Funkübertragungssystem nach Anspruch 3, **dadurch gekennzeichnet, dass** die FIR-Filter mittels schneller Faltung realisiert sind.

5. Mehrkanaliges Funkübertragungssystem nach Anspruch 1, **dadurch gekennzeichnet, dass** die Filterung im Strahlformungsnetzwerk (BF) mittels Filtern (F11, ..., FMN) mit unbegrenzter Impulsantwort (IIR-Filter) erfolgt.

## Claims

1. A multi-channel radio transmission system in which the frequency channels are transmitted or received frequency and spatially multiplexed via a group antenna, wherein the individual antenna elements (A1, ..., AN) of the group antenna can be triggered in such a manner via a beam forming network (BF) that an antenna characteristic oriented in a particular spatial direction can be allocated to each frequency channel (C11, ..., Ckm) and
- he frequency channels (C11, ..., Ckm) in the frequency multiplexing are combined into a plurality of frequency channel groups (FG1, ..., FGK),
- ach frequency channel group (FG1, ..., FGM) is divided in equal power fractions between as many filters (F11, ..., FMN) in the beam forming network (BF) as there are antenna elements (A1, ..., AM),
- ach filter (F11, ..., FMN) has a transmission bandwidth covering all the frequencies of the frequency channel group (FG1, ..., FGM) allocated to it,
- nd the transmission function of each filter (F11, ...,FMN) can be adjusted by means of its coefficients in such a manner that an individual antenna characteristic can be generated for each frequency channel (C11, ..., Ckm) of the frequency channel group (FG1, ..., FGM) allocated to the filter,
**characterised in that** the frequency channels (C11, ..., Ckm) are divided between the frequency channel groups (FG1, ..., FGM) in such a manner that the spacings of the frequency channels within the individual frequency channel groups (FG1, ..., FGM) are as large as possible.

2. The multi-channel radio transmission system according to claim 1, **characterised in that** first means (MUX) are provided which combine the frequency channel groups (FG1, ..., FGM) by frequency multiplexing to form a single frequency channel bundle FB and that second means (M1, LO1, BP1, ..., MM, LOM, BPM) are provided which again separate the frequency channel bundle (FB) into frequency channel groups (FG'1,... FG'M) to then feed them to the beam-forming filtering (BF).

3. The multi-channel radio transmission system according to claim 1, **characterised in that** the filtering in the beam forming network (BF) is effected by means of finite impulse response (FIR filters) filters (F11, ..., FMN).

4. The multi-channel radio transmission system according to claim 3, **characterised in that** the FIR filters are realised by means of rapid convolution.

5. The multi-channel radio transmission system according to claim 1, **characterised in that** the filtering in the beam forming network (BF) is effected by means of infinite impulse response (IIR filters) filters (F11, ..., FMN).

## Revendications

1. Système de radiotransmission à canaux multiples, dans lequel les canaux de fréquence sont émis ou réceptionnés dans le multiplex de fréquence et dans le multiplex spatial via une antenne de groupe, les éléments individuels (Al, .... AN) de l'antenne de groupe étant activables via un réseau de formation de faisceaux (BF), de sorte qu'une caractéristique d'antenne orientée dans une direction spatiale précise soit affectable à chaque canal de fréquence (C11, ...,Ckm), et.
- les canaux de fréquence (C 11, ..., Ckm) étant regroupés en multiplex de fréquence en plusieurs groupes de canaux de fréquence (FGI, ..., FGk),
- chaque groupe de canaux de fréquence (FG1, ,.., FGM) étant réparti en des fractions de puissances égales, sur autant de filtres (F11, ..., FMN) dans le réseau de formation de faisceaux (BF) qu'il existe d'éléments d'antenne (A], ..., AM),
- chaque filtre (F11, ..., FMN) présentant une bande passante comprenant toutes les fréquences des groupes de canaux de fréquence (FGI, ..., FGM) qui lui sont affectés.
- et la fonction de transmission de chaque filtre (F11, ..., FMN) étant réglable via ses coefficients, de sorte à pouvoir générer pour chaque canal de fréquence (C11, ..., Ckm) du groupe de canaux de fréquence (FGI, ..., FGM) associés au filtre, une caractéristique d'antenne individuelle,
**caractérisé en ce que** les canaux de fréquence (C11, ..., Ckm) sont répartis sur les groupes de canaux de fréquence (FG1, ..., FGM), de sorte que les écarts entre les canaux de fréquence (FG 1, ..., FGM) soient le plus importants possible.

2. Système de radiotransmission à plusieurs canaux selon la revendication 1, **caractérisé en ce que** sont prévus des premiers moyens (MUX) qui réunissent les groupes de canaux de fréquence (FG1, ..., FGM) par multiplex de fréquence en un seul faisceau de canaux de fréquence (FB) et par la présence de deuxièmes moyens (M1, LO1, BP ... MM, LOM, BFM) qui re-séparent le faisceau de canaux de fréquence (FB) en des groupes de canaux de fréquence (FG1, ...FGM), pour les amener ensuite vers le filtrage (B) de formation de faisceaux.

3. Système de radiotransmission à plusieurs canaux selon la revendication 1, **caractérisé en ce que** le filtrage dans le réseau de formation de faisceaux (BF) est assuré au moyen de filtres (F11, ..., FMN) à impulsions de réponse limitées (filtre FIR).

4. Système de radiotransmission à plusieurs canaux selon la revendication 3, **caractérisé en ce que** les filtres FIR sont réalisés au moyen d'une convolution rapide.

5. Système de radiotransmission à plusieurs canaux 1, **caractérisé en ce que** le filtrage dans le réseau de formation de faisceaux (BP) est assuré au moyens de filtres (F11, ..., FMN) à impulsions de réponse illimitées (filtre IIR).
